# EUROPEAN PATENT APPLICATION

(11) **EP 4 765 301 A1**
(43) Date of publication of application: **24.06.2026**
(21) Application number: 23948822.4
(22) Date of filing: 15.08.2023
(51) Int. Cl.: H01M 10/0587, H01M 4/02, H01M 4/13, H01M 4/62, H01M 10/05, H01G 11/26

(54) **ELECTROCHEMICAL DEVICE AND ELECTRONIC DEVICE**

(71) Applicant: Xiamen Ampack Technology Limited, Xiamen City, Fujian Province, 361000 (CN)
(72) Inventor: CAI, Yangsheng, Xiamen, Fujian 361000 (CN)
(74) Representative: Kraus & Lederer PartGmbB
(86) International application number: PCT/CN2023/113129
(87) International publication number: WO 2025/035391

(57) **Abstract**

An electrochemical device and an electronic device are provided. In the electrochemical device, a first material layer is disposed on a first surface of a positive current collector, and a second material layer is disposed on a surface of the first material layer, the surface being away from the positive current collector. The first material layer includes a first positive active material. The first positive active material includes at least one of lithium cobalt oxide, lithium nickel cobalt manganese oxide, lithium nickel cobalt aluminum oxide, or lithium manganese oxide. The second material layer includes a second positive active material. The second positive active material includes at least one of lithium iron manganese phosphate or lithium iron phosphate. Along a length direction of an unwound positive electrode plate, a length of the first material layer is greater than a length of the second material layer. A terminal end of the first material layer includes a first end face, and a terminal end of the second material layer includes a second end face. The first end face extends beyond the second end face. The length of the first material layer is less than a length of the second positive active material layer. The risk of delamination of the positive active material layer is reduced, and the capacity of the electrochemical device is relatively high.

## Description

### TECHNICAL FIELD

This application relates to the electrochemical field, and in particular, to an electrochemical device and an electronic device.

### BACKGROUND

Electrochemical devices (such as a lithium-ion battery) are characterized by a high energy density, a low maintenance cost, a low self-discharge rate, a long cycle life, no memory effect, a stable operating voltage, environmental friendliness, and the like, and therefore, are widely used in the fields such as portable electronic devices (such as a mobile phone, a laptop computer, and a camera), electric tools, and electric vehicles. With rapid advancement of technology and diversity of market demand, higher requirements such as thinner thickness, lighter weight, higher safety, and higher capacity are placed on lithium-ion batteries.

A positive electrode plate is a crucial component in a lithium-ion battery. However, in existing positive electrode plates, the adhesion between a positive active material layer and a positive current collector is relatively weak, resulting in a high risk of delamination of the positive active material layer. Therefore, it is essential to develop a lithium-ion battery that can reduce the risk of delamination of the positive active material layer.

### SUMMARY

An objective of this application is to provide an electrochemical device and an electronic device to reduce the risk of delamination of a positive active material layer while achieving a relatively high capacity of the electrochemical device.

It is noted that in the subject-matter hereof, this application is construed by using a lithium-ion battery as an example of an electrochemical device, but the electrochemical device according to this application is not limited to the lithium-ion battery. Specific technical solutions are as follows:

A first aspect of this application provides an electrochemical device. The electrochemical device includes an electrode assembly containing a positive electrode plate. The positive electrode plate includes a positive current collector and a positive active material layer. The positive active material layer includes a first positive active material layer and a second positive active material layer. The positive current collector includes a first surface and a second surface. The first surface faces away from a winding center of the electrode assembly and is opposite to the second surface. The first positive active material layer is disposed on the first surface of the positive current collector, and the second positive active material layer is disposed on the second surface of the positive current collector. The first positive active material layer includes a first material layer and a second material layer. The first material layer is disposed on the first surface of the positive current collector, and the second material layer is disposed on a surface of the first material layer, the surface being away from the positive current collector. The first material layer includes a first positive active material. The first positive active material includes at least one of lithium cobalt oxide, lithium nickel cobalt manganese oxide, lithium nickel cobalt aluminum oxide, or lithium manganese oxide. The second material layer includes a second positive active material. The second positive active material includes at least one of lithium iron manganese phosphate or lithium iron phosphate. Along a length direction of an unwound positive electrode plate, a length of the first material layer is greater than a length of the second material layer. A terminal end of the first material layer includes a first end face, and a terminal end of the second material layer includes a second end face. The first end face extends beyond the second end face. The length of the first material layer is less than a length of the second positive active material layer. This application controls the types of the first and second positive active materials, controls the length of the first material layer to be greater than the length of the second material layer, controls the first end face of the ending end of the first material layer to extend beyond the second end face of the ending end of the second material layer, and controls the length of the first material layer to be less than the length of the second positive active material layer, thereby reducing the risk of delamination of the positive active material layer while achieving a relatively high capacity of the electrochemical device. Furthermore, the above configuration reduces the production cost of the electrochemical device.

In an embodiment of this application, along the length direction of the unwound positive electrode plate, the positive active material layer includes a first body part and a first edge part. The first edge part is a part by which the first material layer extends beyond the second material layer. Based on a total mass of the first positive active material and the second positive active material in the first body part, a mass percentage of the second positive active material is 5% to 95%.

In an embodiment of this application, based on a total mass of the first positive active material and the second positive active material in the first body part, a mass percentage of the second positive active material is 5% to 60%.

In an embodiment of this application, a distance by which the first end face extends beyond the second end face is m₁, satisfying 0.5 mm ≤ m₁ ≤ 5 mm. The distance by which the first end face extends beyond the second end face is controlled to fall within the above range, thereby reducing the risk of delamination of the positive active material layer while achieving a relatively high capacity of the electrochemical device. Furthermore, the above configuration reduces the production cost of the electrochemical device.

In an embodiment of this application, the first material layer further includes a first conductive agent and a first binder, and based on a mass of the first material layer, a mass percentage of the first positive active material is 95% to 98%, a mass percentage of the first conductive agent is 0.5% to 3%, and a mass percentage of the first binder is 0.5% to 3%; and/or the second material layer further includes a second conductive agent and a second binder, and based on a mass of the second material layer, a mass percentage of the second positive active material is 95% to 98%, a mass percentage of the second conductive agent is 0.6% to 3%, and a mass percentage of the second binder is 0.5% to 2%. This application controls the contents of the first positive active material, the first conductive agent, and the first binder in the first material layer to fall within the above ranges, and controls the contents of the second positive active material, the second conductive agent, and the second binder in the second material layer to fall within the above ranges, thereby reducing the risk of delamination of the positive active material layer while achieving a relatively high capacity of the electrochemical device.

In an embodiment of this application, a coating weight of the positive active material layer is 200 mg/1540.24 mm² to 600 mg/1540.24 mm². Controlling the coating weight of the positive active material layer to fall within the above range allows the positive active material layer to contain a relatively large amount of positive active material, thereby providing a relatively high capacity for the electrochemical device.

In an embodiment of this application, a gravimetric capacity of the first positive active material is a, and a gravimetric capacity of the second positive active material is b, satisfying: 10% ≤ (a - b)/b ≤ 75%, and 160 mAh/g ≤ a ≤ 210 mAh/g. Controlling the value of (a-b)/b×100% and the gravimetric capacity a of the first positive active material to fall within the above ranges is beneficial for reducing the production cost of the electrochemical device while achieving a relatively high capacity of the electrochemical device and reducing the risk of delamination of the positive active material layer.

In an embodiment of this application, 14% ≤ (a - b)/b ≤ 30%. Controlling the value of (a-b)/b× 100% to fall within the above range is beneficial to further reducing the production cost of the electrochemical device while achieving a relatively high capacity of the electrochemical device and reducing the risk of delamination of the positive active material layer.

In an embodiment of this application, 120 mAh/g ≤ b ≤ 140 mAh/g.

In an embodiment of this application, the electrochemical device further includes a negative electrode plate. The negative electrode plate includes a negative current collector and a negative active material layer disposed on at least one surface of the negative current collector. The coating weight of the negative active material layer is 100 mg/1540.24 mm² to 300 mg/1540.24 mm². Controlling the coating weight of the negative active material layer to fall within the above range can provide a relatively high capacity for the negative active material layer, thereby endowing the electrochemical device with a relatively high capacity.

In an embodiment of this application, the negative active material layer includes a negative active material, and a gravimetric capacity of the negative active material is 280 mAh/g to 420 mAh/g. Controlling the gravimetric capacity of the negative active material to fall within the above range is beneficial for providing a relatively high capacity for the electrochemical device.

In an embodiment of this application, a cell balance value CB of the electrochemical device satisfies: 1.04 ≤ CB ≤ 1.2.

In an embodiment of this application, a CB value of the edge part is greater than or equal to a CB value of the body part.

In an embodiment of this application, the second positive active material layer includes a third material layer and a fourth material layer. The third material layer is disposed on a second surface of the positive current collector, and the fourth material layer is disposed on a surface of the third material layer, the surface being away from the positive current collector. Along the length direction of the unwound positive electrode plate, a length of the third material layer is greater than a length of the fourth material layer. A terminal end of the third material layer includes a third end face, and a terminal end of the fourth material layer includes a fourth end face. The third end face extends beyond the fourth end face. By setting the length of the third material layer to be greater than the length of the fourth material layer, and setting the third end face of the ending end of the third material layer to extend beyond the fourth end face of the ending end of the fourth material layer, this application reduces the probability of contact between the fourth material layer and the positive current collector when the second positive active material layer provides a relatively high capacity for the electrochemical device, thereby reducing the risk of delamination of the positive active material layer.

In an embodiment of this application, the length of the first material layer is less than the length of the third material layer, and/or the length of the first material layer is less than the length of the fourth material layer. The above configuration reduces the risk of delamination of the positive active material layer while resulting in a relatively high capacity of the electrochemical device. Furthermore, the above configuration reduces the production cost of the electrochemical device.

In an embodiment of this application, a distance by which the third end face extends beyond the fourth end face is m₂, satisfying 0.5 mm ≤ m₂ ≤ 5 mm. The distance by which the third end face extends beyond the fourth end face is controlled to fall within the above range, thereby reducing the risk of delamination of the positive active material layer while achieving a relatively high capacity of the electrochemical device.

A second aspect of this application provides an electronic device. The electronic device includes the electrochemical device according to any one of the above embodiments. Therefore, the electronic device exhibits superior operating performance.

Beneficial effects of some embodiments of this application are as follows:
Some embodiments of this application provide an electrochemical device and an electronic device. The first positive active material in the electrochemical device exhibits high adhesiveness and a high gravimetric capacity. Applying the first positive active material to a first material layer ensures strong adhesion between the first material layer and the positive current collector, thereby reducing the risk of delamination of the positive active material layer and providing a relatively high gravimetric capacity for the electrochemical device, thereby endowing the electrochemical device with a high capacity. The second positive active material is characterized by a high gravimetric capacity and low cost. Applying the above type of second positive active material to the second material layer can reduce the production cost of the electrochemical device while achieving a relatively high capacity of the electrochemical device. Because the second material layer is less adhesive than the first material layer, this application sets the length of the first material layer to be greater than the length of the second material layer, and sets the first end face of the ending end of the first material layer to extend beyond the second end face of the ending end of the second material layer, thereby reducing the probability of contact between the second material layer and the positive current collector and consequently reducing the risk of delamination of the positive active material layer. Furthermore, by making the length of the first material layer shorter than the length of the second positive active material layer, this application can reduce the amount of coating of the positive active material layer at the ending end of the positive electrode plate, thereby reducing the production cost of the electrochemical device. Therefore, this application controls the types of the first and second positive active materials, controls the length of the first material layer to be greater than the length of the second material layer, controls the first end face of the ending end of the first material layer to extend beyond the second end face of the ending end of the second material layer, and controls the length of the first material layer to be less than the length of the second positive active material layer, thereby reducing the risk of delamination of the positive active material layer while achieving a relatively high capacity of the electrochemical device. Furthermore, the above configuration reduces the production cost of the electrochemical device.

### BRIEF DESCRIPTION OF DRAWINGS

The drawings described herein are intended to enable a further understanding of this application, and constitute a part of this application. The exemplary embodiments of this application and the description thereof are intended to explain this application but not to constitute any undue limitation on this application.
FIG. 1 is a schematic structural diagram of an electrode assembly according to an embodiment of this application;
FIG. 2 is a cross-sectional schematic view of an unwound positive electrode plate sectioned along a length direction and a thickness direction of the electrode plate according to an embodiment of this application;
FIG. 3 is a schematic top view of the positive electrode plate shown in FIG. 2; and
FIG. 4 is a cross-sectional schematic view of a positive active material layer and a negative active material layer sectioned along a thickness direction of the material layer according to an embodiment of this application.

### DETAILED DESCRIPTION

To make the objectives, technical solutions, and advantages of this application clearer, the following describes this application in more detail with reference to drawings and embodiments. Evidently, the described embodiments are merely a part of but not all of the embodiments of this application. All other embodiments derived by a person skilled in the art based on this application still fall within the protection scope of this application.

It is noted that in specific embodiments of this application, this application is construed by using a lithium-ion battery as an example of the electrochemical device, but the electrochemical device according to this application is not limited to the lithium-ion battery.

A first aspect of this application provides an electrochemical device. The electrochemical device includes an electrode assembly containing a positive electrode plate. The positive electrode plate includes a positive current collector and a positive active material layer. The positive active material layer includes a first positive active material layer and a second positive active material layer. The positive current collector includes a first surface and a second surface. The first surface faces away from a winding center of the electrode assembly and is opposite to the second surface. The first positive active material layer is disposed on the first surface of the positive current collector, and the second positive active material layer is disposed on the second surface of the positive current collector. The first positive active material layer includes a first material layer and a second material layer. The first material layer is disposed on the first surface of the positive current collector, and the second material layer is disposed on a surface of the first material layer, the surface being away from the positive current collector. The first material layer includes a first positive active material. The first positive active material includes at least one of lithium cobalt oxide, lithium nickel cobalt manganese oxide, lithium nickel cobalt aluminum oxide, or lithium manganese oxide. The second material layer includes a second positive active material. The second positive active material includes at least one of lithium iron manganese phosphate or lithium iron phosphate. Along a length direction of an unwound positive electrode plate, a length of the first material layer is greater than a length of the second material layer. A terminal end of the first material layer includes a first end face, and a terminal end of the second material layer includes a second end face. The first end face extends beyond the second end face. The length of the first material layer is less than a length of the second positive active material layer.

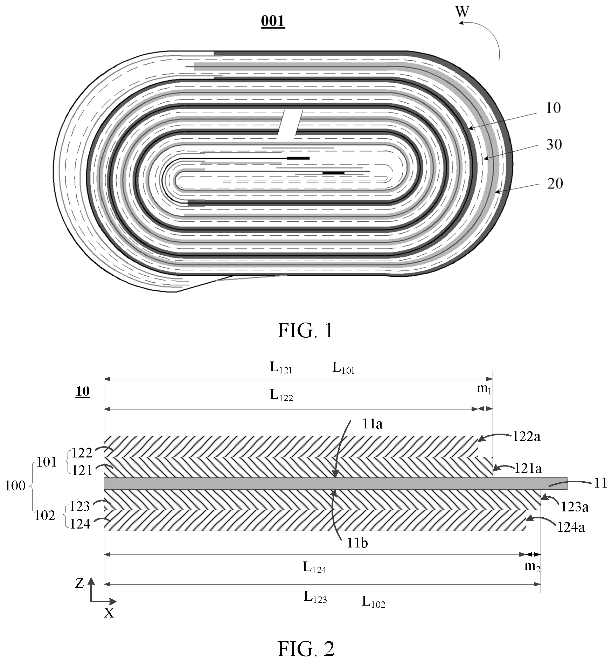

As shown in FIG. 1 to FIG. 3, the structure of the electrode assembly 001 is a jelly-roll structure, and the winding direction is a W direction. The electrode assembly 001 includes a positive electrode plate 10, a negative electrode plate 20, and a separator 30 disposed between the positive electrode plate 10 and the negative electrode plate 20. A person skilled in the art understands that the winding directions of the positive electrode plate 10, the negative electrode plate 20, and the separator 30 in the electrode assembly 001 are the same as the winding direction of the electrode assembly 001, and the winding directions of the positive current collector 11 and the positive active material layer 100 in the positive electrode 10 are the same as the winding direction of the electrode assembly 001. The positive electrode plate 10 includes a positive current collector 11, a first positive active material layer 101, and a second positive active material layer 102. The positive current collector 11 includes a first surface 11a and a second surface 11b. The first surface 11a faces away from the winding center of the electrode assembly 001 and is opposite to the second surface 11b. The first positive active material layer 101 includes a first material layer 121 and a second material layer 122. The first material layer 121 is disposed on the first surface 11a of the positive current collector 11, and the second material layer 122 is disposed on a surface of the first material layer 121, the surface being away from the positive current collector 11. The first material layer 121 is located between the second material layer 122 and the positive current collector 11. The first material layer 121 includes a first positive active material. The first positive active material includes at least one of lithium cobalt oxide, lithium nickel cobalt manganese oxide, lithium nickel cobalt aluminum oxide, or lithium manganese oxide. The second material layer 122 includes a second positive active material, and the second positive active material includes at least one of lithium iron manganese phosphate or lithium iron phosphate. For ease of understanding, it is defined that in an unwound state of the positive electrode plate 10, the length direction of the electrode plate is X, the width direction of the electrode plate is Y, and the thickness direction of the electrode plate is Z. Understandably, in the unwound state, the length direction, the width direction, and the thickness direction of the negative electrode plate 20 are the same as those of the separator 30. Along the length direction X of an unwound positive electrode plate 10, the length L₁₂₁ of the first material layer 121 is greater than the length L₁₂₂ of the second material layer 122, the ending end of the first material layer 121 includes a first end face 121a, the ending end of the second material layer 122 includes a second end face 122a, and the first end face 121a extends beyond the second end face 122a. The length L₁₀₁ of the first positive active material layer 101 is less than the length L₁₀₂ of the second positive active material layer 102.

The above types of first positive active materials exhibit high adhesiveness and a high gravimetric capacity. Applying the above types of first positive active materials to the first material layer ensures strong adhesion between the first material layer and the positive current collector, thereby reducing the risk of delamination of the positive active material layer and providing a relatively high gravimetric capacity for the electrochemical device, thereby endowing the electrochemical device with a high capacity. The above types of second positive active materials are characterized by a high gravimetric capacity and low cost. Applying the above types of second positive active materials to the second material layer can reduce the production cost of the electrochemical device while achieving a relatively high capacity of the electrochemical device. Because the second material layer is less adhesive than the first material layer, this application sets the length of the first material layer to be greater than the length of the second material layer, and sets the first end face of the ending end of the first material layer to extend beyond the second end face of the ending end of the second material layer, thereby reducing the probability of contact between the second material layer and the positive current collector and consequently reducing the risk of delamination of the positive active material layer. Furthermore, by making the length of the first material layer shorter than the length of the second positive active material layer, this application can reduce the amount of coating of the positive active material layer at the ending end of the positive electrode plate, thereby reducing the production cost of the electrochemical device. Therefore, this application controls the types of the first and second positive active materials, controls the length of the first material layer to be greater than the length of the second material layer, controls the first end face of the ending end of the first material layer to extend beyond the second end face of the ending end of the second material layer, and controls the length of the first material layer to be less than the length of the second positive active material layer, thereby reducing the risk of delamination of the positive active material layer while achieving a relatively high capacity of the electrochemical device. Furthermore, the above configuration reduces the production cost of the electrochemical device.

In some other embodiments, along the Y direction, the end face of the positive current collector on the other side may also extend beyond the end face of the first positive active material layer or the end face of the second positive active material layer; or, along the Y direction, the end face of the positive current collector 11 on the other side may also extend beyond the end face of the first positive active material layer or the end face of the second positive active material layer.

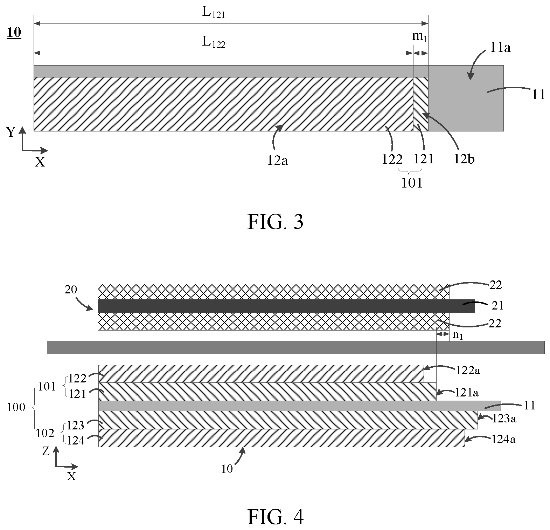

In an embodiment of this application, as shown in FIG. 3, along the length direction X of the unwound positive electrode plate 10, the first positive active material layer 101 includes a first body part 12a and a first edge part 12b. The first edge part 12b is a part by which the first material layer 121 extends beyond the second material layer 122. The first body part 12a means a part other than the first edge part 12b in the first positive active material layer 101. Based on the total mass of the first positive active material and the second positive active material in the first body part, the mass percentage of the second positive active material is 5% to 95%. For example, the mass percentage of the second positive active material is 5%, 10%, 15%, 20%, 25%, 30%, 35%, 40%, 45%, 50%, 55%, 60%, 65%, 70%, 75%, 80%, 85%, 90%, 95%, or a value falling within a range formed by any two thereof. Controlling the mass percentage of the second positive active material to fall within the above range reduces the risk of delamination of the positive active material layer while achieving a relatively high capacity of the electrochemical device.

In an embodiment of this application, based on a total mass of the first positive active material and the second positive active material in the first body part, a mass percentage of the second positive active material is 5% to 60%.

The mass percentage of the first positive active material is not particularly limited herein, as long as the objectives of this application can be achieved. For example, based on the total mass of the first positive active material and the second positive active material in the first body part, the mass percentage of the first positive active material is 5% to 95%. Further, the mass percentage of the first positive active material is 40% to 95%.

In an embodiment of this application, a distance by which the first end face extends beyond the second end face is m₁, satisfying 0.5 mm ≤ m₁ ≤ 5 mm. For example, m₁ is 0.5 mm, 1 mm, 1.5 mm, 2 mm, 2.5 mm, 3 mm, 3.5 mm, 4 mm, 4.5 mm, 5 mm, or any value falling within a range formed by any two thereof. As shown in FIG. 2, the distance by which the first end face 121a extends beyond the second end face 122a is m₁. The distance by which the first end face extends beyond the second end face is controlled to fall within the above range, thereby reducing the probability of contact between the second material layer and the positive current collector, and consequently reducing the risk of delamination of the positive active material layer. This also ensures that both the first material layer and the second material layer are, as far as possible, applied to the region coated with the first positive active material layer on the positive current collector, thereby providing the highest possible capacity and reducing production cost. In this way, the risk of delamination of the positive active material layer is reduced while achieving a relatively high capacity of the electrochemical device. Furthermore, the above configuration reduces the production cost of the electrochemical device.

In an embodiment of this application, the electrochemical device further includes a negative electrode plate. The negative electrode plate includes a negative current collector and a negative active material layer disposed on at least one surface of the negative current collector. As an example, in some embodiments, as shown in FIG. 4, the negative electrode plate 20 includes a negative current collector 21 and a negative active material layer 22 disposed on both surfaces of the negative current collector 21. A person skilled in the art understands that in other embodiments, the negative active material layer 22 may be disposed on just one surface of the negative current collector 21. The "surface" here may be a partial surface region of the negative current collector 21, or an entire surface region of the negative current collector 21, without being particularly limited herein, as long as the objectives of the application can be achieved.

In an embodiment of this application, along the length direction of the unwound positive electrode plate, a distance by which one end of the negative active material layer extends beyond the corresponding end of the positive active material layer is n₁, satisfying 2 mm ≤ n₁ ≤ 15 mm. For example, n₁ is 2 mm, 3 mm, 5 mm, 7 mm, 9 mm, 11 mm, 13 mm, 15 mm, or any value falling within a range formed by any two thereof. As shown in FIG. 4, along the length direction X of the unwound positive electrode plate 10, one end of the negative active material layer 22 extends beyond the corresponding end of the positive active material layer 100. In other words, the distance between the first end face 121a of the first material layer 121 in the first positive active material layer 101 and the corresponding end face of the negative active material layer 22 is n₁. The distance by which one end of the negative active material layer extends beyond the corresponding end of the positive active material layer is controlled to fall within the above range, so that the negative active material layer can provide more sites for accommodating the lithium deintercalated from the positive active material layer, thereby reducing the probability of lithium plating on the surface of the negative electrode plate, reducing the risk of a cost increase caused by an excessive amount of negative active material layer, and consequently reducing the production cost of the electrochemical device. Therefore, the above configuration is beneficial for reducing lithium plating and production cost of the electrochemical device while achieving a relatively high capacity of the electrochemical device and reducing the risk of delamination of the positive active material layer.

In an embodiment of this application, the first material layer further includes a first conductive agent and a first binder. Based on a mass of the first material layer, a mass percentage of the first positive active material is 95% to 98%, a mass percentage of the first conductive agent is 0.5% to 3%, and a mass percentage of the first binder is 0.5% to 3%. For example, based on the mass of the first material layer, the mass percentage of the first positive active material is 95%, 95.5%, 96%, 96.5%, 97%, 97.5%, 98%, or a value falling within a range formed by any two thereof. For example, based on the mass of the first material layer, the mass percentage of the first conductive agent is 0.5%, 1%, 1.5%, 2%, 2.5%, 3%, or a value falling within a range formed by any two thereof. For example, based on the mass of the first material layer, the mass percentage of the first binder is 0.5%, 1%, 1.5%, 2%, 2.5%, 3%, or a value falling within a range formed by any two thereof. This application controls the contents of the first positive active material, the first conductive agent, and the first binder in the first material layer to fall within the above ranges, thereby providing a high gravimetric capacity in addition to relatively high adhesion between the first material layer and the positive current collector, and reducing the risk of delamination of the positive active material layer while achieving a relatively high capacity of the electrochemical device.

In an embodiment of this application, the second material layer further includes a second conductive agent and a second binder. Based on a mass of the second material layer, a mass percentage of the second positive active material is 95% to 98%, a mass percentage of the second conductive agent is 0.6% to 3%, and a mass percentage of the second binder is 0.5% to 2%. For example, based on the mass of the second material layer, the mass percentage of the second positive active material is 95%, 95.5%, 96%, 96.5%, 97%, 97.5%, 98%, or a value falling within a range formed by any two thereof. For example, based on the mass of the second material layer, the mass percentage of the second conductive agent is 0.6%, 1%, 1.5%, 2%, 2.5%, 3%, or a value falling within a range formed by any two thereof. For example, based on the mass of the second material layer, the mass percentage of the second binder is 0.5%, 1%, 1.5%, 2%, or a value falling within a range formed by any two thereof. This application controls the contents of the second positive active material, the second conductive agent, and the second binder in the second material layer to fall within the above ranges, thereby providing a relatively high gravimetric capacity and relatively low production cost in addition to relatively high adhesion between the second material layer and the first material layer, and reducing the risk of delamination of the positive active material layer while achieving a relatively high capacity of the electrochemical device.

In an embodiment of this application, a coating weight of the positive active material layer is 200 mg/1540.24 mm² to 600 mg/1540.24 mm². For example, the coating weight of the positive active material layer is 200 mg/1540.24 mm², 250 mg/1540.24 mm², 300 mg/1540.24 mm², 350 mg/1540.24 mm², 400 mg/1540.24 mm², 450 mg/1540.24 mm², 500 mg/1540.24 mm², 550 mg/1540.24 mm², 600 mg/1540.24 mm², or a value falling within a range formed by any two thereof. Controlling the coating weight of the positive active material layer to fall within the above range leads to relatively high contents of the first positive active material and the second positive active material in the positive active material layer, and allows the positive active material layer to contain a relatively large amount of positive active material, thereby providing a relatively high capacity for the electrochemical device.

In an embodiment of this application, a gravimetric capacity of the first positive active material is a, and a gravimetric capacity of the second positive active material is b, satisfying: 10% ≤ (a - b)/b × 100% ≤ 75%, and 160 mAh/g ≤ a ≤ 210 mAh/g. For example, the value of (a-b)/b× 100% is 10%, 14%, 20%, 30%, 40%, 50%, 60%, 70%, 75%, or a value falling within a range formed by any two thereof. For example, a is 160 mAh/g, 170 mAh/g, 180 mAh/g, 190 mAh/g, 200 mAh/g, 210 mAh/g, or a value falling within a range formed by any two thereof. The value of (a-b)/b× 100% and the gravimetric capacity a of the first positive active material are controlled to fall within the above ranges so that the first positive active material works in unison with the second positive active material, thereby reducing the production cost of the positive active material layer while achieving a relatively high capacity of the positive active material layer. Therefore, the above configuration is beneficial for reducing production cost of the electrochemical device while achieving a relatively high capacity of the electrochemical device and reducing the risk of delamination of the positive active material layer.

In an embodiment of this application, 14% ≤ (a - b)/b ≤ 30%. Controlling the value of (a-b)/b× 100% to fall within the above range is beneficial to further reducing the production cost of the electrochemical device while achieving a relatively high capacity of the electrochemical device and reducing the risk of delamination of the positive active material layer.

In an embodiment of this application, 120 mAh/g ≤ b ≤ 140 mAh/g. For example, b is 120 mAh/g, 125 mAh/g, 130 mAh/g, 135 mAh/g, 140 mAh/g, or a value falling within a range formed by any two thereof. Controlling the gravimetric capacity b of the second positive active material to fall within the above range is beneficial for further increasing the capacity of the electrochemical device.

The methods for regulating and controlling the gravimetric capacities of the first positive active material and the second positive active material are not particularly limited herein, as long as the objectives of this application can be achieved. For example, the control may be implemented by regulating and controlling the types of the first positive active material and the second positive active material.

In an embodiment of this application, a coating weight of the negative active material layer is 100 mg/1540.24 mm² to 300 mg/1540.24 mm². For example, the coating weight of the negative active material layer is 100 mg/1540.24 mm², 140 mg/1540.24 mm², 180 mg/1540.24 mm², 220 mg/1540.24 mm², 260 mg/1540.24 mm², 300 mg/1540.24 mm², or a value falling within a range formed by any two thereof. By controlling the coating weight of the negative active material layer to fall within the above range, this application makes the negative active material layer contain a relatively high content of negative active material, thereby providing a relatively high capacity for the negative active material layer, and consequently endowing the electrochemical device with a relatively high capacity.

In an embodiment of this application, the negative active material layer includes a negative active material, and a gravimetric capacity of the negative active material is 280 mAh/g to 420 mAh/g. For example, the gravimetric capacity of the negative active material is 280 mAh/g, 300 mAh/g, 320 mAh/g, 340 mAh/g, 360 mAh/g, 380 mAh/g, 400 mAh/g, 420 mAh/g, or a value falling within a range formed by any two thereof. Controlling the gravimetric capacity of the negative active material to fall within the above range is beneficial for providing a relatively high capacity for the electrochemical device.

The method for regulating and controlling the gravimetric capacity of the negative active material is not particularly limited herein, as long as the objectives of this application can be achieved. For example, the control may be implemented by regulating and controlling the type of the negative active material.

In an embodiment of this application, a cell balance value CB of the electrochemical device satisfies: 1.04 ≤ CB ≤ 1.2. In this application, the CB value is equal to (gravimetric capacity of the negative active material × mass of the negative active material per unit area of the negative electrode plate)/(gravimetric capacity of the first positive active material × mass of the first positive active material per unit area of the positive electrode plate + gravimetric capacity of the second positive active material × mass of the second positive active material per unit area of the positive electrode plate), where "unit area" means 1 mm². By controlling the CB value to fall within the above range, the lithium deintercalated from the positive electrode plate of the electrochemical device is facilitated for being fully intercalated into the negative electrode plate under the current actual production capacity, thereby favorably reducing lithium plating, improving the cycle performance of the electrochemical device, and also minimizing the amount of negative active material used in the negative electrode plate, and consequently reducing the production cost of the electrochemical device.

In an embodiment of this application, the CB value of the first edge part is greater than or equal to the CB value of the first body part. In this application, the CB value of the first edge part is 1.08 to 1.3, and the CB value of the first body part is 1.05 to 1.1. The CB value of the first edge part is less than or equal to the CB value of the first body part, thereby favorably improving the kinetics at the edge of the electrochemical device, and overcoming the problem that the edge part exhibits lower kinetics than the body part due to being relatively loose.

In an embodiment of this application, as shown in FIG. 2, the second positive active material layer 102 includes a third material layer 123 and a fourth material layer 124. The third material layer 123 is disposed on a second surface 11b of the positive current collector 11. The fourth material layer 124 is disposed on a surface of the third material layer 123, the surface being away from the positive current collector 11. Along the length direction X of the unwound positive electrode plate 10, the length L₁₂₃ of the third material layer 123 is greater than the length L₁₂₄ of the fourth material layer 124. The ending end of the third material layer 123 includes a third end face 123a. The ending end of the fourth material layer 124 includes a fourth end face 124a. The third end face 123a extends beyond the fourth end face 124a. By setting the length of the third material layer to be greater than the length of the fourth material layer, and setting the third end face of the ending end of the third material layer to extend beyond the fourth end face of the ending end of the fourth material layer, this application reduces the probability of contact between the fourth material layer and the positive current collector when the second positive active material layer provides a relatively high capacity for the electrochemical device, thereby reducing the risk of delamination of the positive active material layer.

In an embodiment of this application, the length of the first material layer is less than the length of the third material layer. In an embodiment of this application, the length of the first material layer is less than the length of the fourth material layer. In an embodiment of this application, the length of the first material layer is less than the length of the third material layer and the length of the first material layer is less than the length of the fourth material layer. In an example, as shown in FIG. 2, the length L₁₂₁ of the first material layer 121 is less than the length L₁₂₃ of the third material layer 123, and the length L₁₂₁ of the first material layer 121 is less than the length L₁₂₄ of the fourth material layer 124. By regulating and controlling the length of the first material layer to be less than the length of the third material layer and/or regulating and controlling the length of the first material layer to be less than the length of the fourth material layer, this application reduces the risk of delamination of the positive active material layer while achieving a relatively high capacity of the electrochemical device. Furthermore, the above configuration reduces the production cost of the electrochemical device.

In an embodiment of this application, as shown in FIG. 2, a distance by which the third end face 121b extends beyond the fourth end face 122b is m₂, satisfying 0.5 mm ≤ m₂ ≤ 5 mm. For example, m₂ is 0.5 mm, 1 mm, 1.5 mm, 2 mm, 2.5 mm, 3 mm, 3.5 mm, 4 mm, 4.5 mm, 5 mm, or any value falling within a range formed by any two thereof. The distance by which the third end face extends beyond the fourth end face is controlled to fall within the above range, thereby reducing the probability of contact between the fourth material layer and the positive current collector, and consequently reducing the risk of delamination of the second positive active material layer. This also ensures that both the first material layer and the second material layer are, as far as possible, applied to the region coated with the second positive active material layer on the positive current collector, thereby providing the highest possible capacity and reducing production cost. In this way, the risk of delamination of the positive active material layer is reduced while achieving a relatively high capacity of the electrochemical device.

In an embodiment of this application, the third material layer includes a first positive active material, and the fourth material layer includes a second positive active material. Applying the first positive active material to the third material layer ensures strong adhesion between the third material layer and the positive current collector, thereby reducing the risk of delamination of the positive active material layer and providing a relatively high gravimetric capacity for the electrochemical device, thereby endowing the electrochemical device with a high capacity. Applying the second positive active material to the fourth material layer can reduce the production cost of the electrochemical device while achieving a relatively high capacity of the electrochemical device. This also reduces the risk of delamination of the positive active material layer, reduces the production cost of the electrochemical device, and increases the capacity of the electrochemical device.

In an embodiment of this application, the third material layer further includes a first conductive agent and a first binder. Based on a mass of the third material layer, a mass percentage of the first positive active material is 95% to 98%, a mass percentage of the first conductive agent is 0.5% to 3%, and a mass percentage of the first binder is 0.5% to 3%. For example, based on the mass of the third material layer, the mass percentage of the first positive active material is 95%, 95.5%, 96%, 96.5%, 97%, 97.5%, 98%, or a value falling within a range formed by any two thereof. For example, based on the mass of the third material layer, the mass percentage of the first conductive agent is 0.5%, 1%, 1.5%, 2%, 2.5%, 3%, or a value falling within a range formed by any two thereof. For example, based on the mass of the third material layer, the mass percentage of the first binder is 0.5%, 1%, 1.5%, 2%, 2.5%, 3%, or a value falling within a range formed by any two thereof. This application controls the contents of the first positive active material, the first conductive agent, and the first binder in the third material layer to fall within the above ranges, thereby providing a high gravimetric capacity in addition to relatively high adhesion between the third material layer and the positive current collector, and reducing the risk of delamination of the positive active material layer while achieving a relatively high capacity of the electrochemical device.

In an embodiment of this application, the fourth material layer further includes a second conductive agent and a second binder. Based on a mass of the fourth material layer, a mass percentage of the second positive active material is 95% to 98%, a mass percentage of the second conductive agent is 0.6% to 3%, and a mass percentage of the second binder is 0.5% to 2%. For example, based on the mass of the fourth material layer, the mass percentage of the second positive active material is 95%, 95.5%, 96%, 96.5%, 97%, 97.5%, 98%, or a value falling within a range formed by any two thereof. For example, based on the mass of the fourth material layer, the mass percentage of the second conductive agent is 0.6%, 1%, 1.5%, 2%, 2.5%, 3%, or a value falling within a range formed by any two thereof. For example, based on the mass of the fourth material layer, the mass percentage of the second binder is 0.5%, 1%, 1.5%, 2%, or a value falling within a range formed by any two thereof. This application controls the contents of the second positive active material, the second conductive agent, and the second binder in the fourth material layer to fall within the above ranges, thereby providing a relatively high gravimetric capacity and relatively low production cost in addition to relatively high adhesion between the fourth material layer and the third material layer, and reducing the risk of delamination of the positive active material layer while achieving a relatively high capacity of the electrochemical device.

The types of the first conductive agent, the first binder, the second conductive agent, and the second binder are not particularly limited herein as long as the objectives of this application can be achieved. For example, the first conductive agent and the second conductive agent each are at least one independently selected from conductive carbon black, conductive carbon nanotubes, carbon fibers, conductive graphite, or graphene. For example, the first binder and the second binder each are at least one independently selected from polyvinylidene fluoride, polytetrafluoroethylene, polypropylene, polyacrylic acid, ethyl polyacrylate, polyacrylonitrile, sodium carboxymethyl cellulose, styrene-butadiene rubber, or polyurethane.

In an embodiment of this application, along the length direction of the unwound positive electrode plate, the second positive active material layer includes a second body part and a second edge part. The second edge part is a part by which the third material layer extends beyond the fourth material layer. The CB value of the second edge part is greater than or equal to the CB value of the second body part. The second body part means a part other than the second edge part in the second positive active material layer. In this application, the CB value of the second edge part is 1.08 to 1.3, and the CB value of the second body part is 1.05 to 1.1. The CB value of the second edge part is greater than the CB value of the second body part, thereby being favorably improving the kinetics at the edge of the electrochemical device, and overcoming the problem that the edge part exhibits lower kinetics than the body part due to being relatively loose.

In an embodiment of this application, the mass percentage of the first positive active material in the first body part is the same as the mass percentage of the first positive active material in the second body part; and the mass percentage of the second positive active material in the first body part is the same as the mass percentage of the second positive active material in the second body part.

The type of the positive current collector is not particularly limited herein, as long as the objectives of this application can be achieved. For example, the positive current collector may include aluminum foil, aluminum alloy foil, or the like.

The method for preparing the positive electrode plate is not particularly limited herein, as long as the objectives of this application can be achieved. For example, the preparation method of the positive electrode plate may include, but is not limited to, the following steps: (1) preparing a first positive electrode slurry, a second positive electrode slurry, a third positive electrode slurry, and a fourth positive electrode slurry; (2) applying the first positive electrode slurry onto a first surface of the positive current collector, and oven-drying the slurry to obtain a positive electrode plate coated with a first material layer; applying the second positive electrode slurry onto a surface of the first material layer, the surface being away from the positive current collector, and oven-drying the slurry to obtain a positive electrode plate coated with the first material layer and a second material layer; (3) applying the third positive electrode slurry onto a second surface of the positive current collector, and oven-drying the slurry to obtain a positive electrode plate coated with the first material layer, the second material layer, and a third material layer; and applying the fourth positive electrode slurry onto a surface of the third material layer, the surface being away from the positive current collector, and oven-drying the slurry to obtain a positive electrode plate coated with the first material layer, the second material layer, the third material layer, and a fourth material layer; and (4) performing cold-pressing and cutting, and welding a positive tab. The preparation methods of the first, second, third, and fourth positive electrode slurries in step (1) above are not particularly limited herein, as long as the contents of the first positive active material, the first conductive agent, and the first binder in the first and third material layers fall within the ranges specified herein, and as long as the contents of the second positive active material, the second conductive agent, and the second binder in the second and fourth material layers fall within the ranges specified herein, and as long as the objectives of this application can be achieved. The oven-drying temperature and time in step (2) above are not particularly limited herein, and may be selected by a person skilled in the art as actually required, as long as the objectives of this application can be achieved. The process parameters of the cold-pressing, cutting, and welding of the positive tab in step (4) above are not particularly limited herein, and may be selected by a person skilled in the art as actually required, as long as the objectives of this application can be achieved. The dimensions of the first material layer, the second material layer, the third material layer, and the fourth material layer are not particularly limited herein, as long as the objectives of this application can be achieved.

The negative current collector is not particularly limited herein, as long as the objectives of this application can be achieved. For example, the negative current collector may include copper foil, copper alloy foil, nickel foil, titanium foil, foamed nickel, foamed copper, or the like. The type of the negative active material is not particularly limited in this application, as long as the objectives of this application can be achieved. For example, the negative active material may include at least one of natural graphite, artificial graphite, soft carbon, hard carbon, mesocarbon microbeads, tin-based material, silicon-based material, lithium titanium oxide, transition metal nitride, or natural flake graphite, or the like. Optionally, the negative active material layer further includes at least one of a negative conductive agent, a thickener, or a negative electrode binder. The types of the negative conductive agent, the thickener, and the negative electrode binder in the negative active material layer are not particularly limited herein, as long as the objectives of this application can be achieved. The mass ratio between the negative active material, the negative conductive agent, the thickener, and the negative electrode binder in the negative active material layer is not particularly limited herein, as long as the objectives of this application can be achieved. For example, the mass ratio between the negative active material, the negative conductive agent, the thickener, and the negative electrode binder in the negative active material layer is (97 to 98):(0 to 1.5):(0.5 to 1.5):(1.0 to 1.9).

The thicknesses of the negative current collector and the negative active material layer are not particularly limited herein, as long as the objectives of this application can be achieved. For example, the thickness of the negative current collector is 5 µm to 20 µm, and the thickness of the negative active material layer is 30 µm to 120 µm.

The electrochemical device of this application further includes a separator. The separator is disposed between the positive electrode plate and the negative electrode plate to separate the positive electrode plate from the negative electrode plate. The separator is not particularly limited herein, as long as the objectives of this application can be achieved. For example, the separator may be made of a material including but not limited to at least one of: a polyethylene (PE)- or polypropylene (PP)-based polyolefin (PO), a polyester (such as polyethylene terephthalate (PET) film), cellulose, polyimide (PI), polyamide (PA), spandex, or aramid. The type of the separator may include a woven film, a nonwoven film, a microporous film, a composite film, a calendered film, or a spinning film.

In an embodiment of this application, the electrochemical device further includes a packaging bag and an electrolyte solution. The electrolyte solution, the positive electrode plate, the separator, and the negative electrode plate are accommodated in the packaging bag. The packaging bag and the electrolyte solution are not particularly limited herein, and a packaging bag and an electrolyte solution well-known in the art may be selected by a person skilled in the art as required, as long as the objectives of this application can be achieved.

The type of the electrochemical device is not particularly limited herein, and may be any device in which an electrochemical reaction occurs. For example, the electrochemical device may include, but is not limited to, a lithium metal secondary battery, a lithium-ion secondary battery (lithium-ion battery), a sodium-ion secondary battery (sodium-ion battery), a lithium polymer secondary battery, a lithium-ion polymer secondary battery.

The method for preparing the electrochemical device is not particularly limited herein, and may be any preparation method well-known in the art, as long as the objectives of this application can be achieved. For example, the method for preparing the electrochemical device includes, but is not limited to, the following steps: stacking the positive electrode plate, the separator, and the negative electrode plate in sequence, and performing operations such as winding and folding as required to obtain a jelly-roll electrode assembly; putting the electrode assembly into a package, injecting the electrolyte solution into the package, and sealing the package to obtain an electrochemical device; or, stacking the positive electrode plate, the separator, and the negative electrode plate in sequence, and then fixing the four corners of the entire stacked structure to obtain a stacked-type electrode assembly, putting the electrode assembly into a package, injecting the electrolyte solution into the package, and sealing the package to obtain an electrochemical device.

A second aspect of this application provides an electronic device. The electronic device includes the electrochemical device according to any one of the above embodiments. Therefore, the electronic device exhibits superior operating performance.

The electronic device is not particularly limited herein, and may be any electronic device known in the prior art. For example, the electronic device may include, but is not limited to, a notebook computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, lighting appliance, toy, game console, watch, electric tool, flashlight, camera, large household storage battery, or lithium-ion capacitor.

### Embodiments

The implementations of this application are described below in more detail with reference to some embodiments and comparative embodiments. Various tests and evaluations are performed by the following methods.

### Test methods and devices:

### Test of the gravimetric capacity:

### (1) Test of the gravimetric capacity a of the first positive active material

First, removing the positive electrode plate from a fully discharged lithium-ion battery, and drying the electrolyte solution in the positive electrode plate in an electric oven at 60 °C. Scraping off the second positive active material layer from the positive electrode plate with a knife, and scraping the first positive active material powder with a knife. Weighing out the powder using a balance, and recording the weight as m₁ = 100 mg. Immersing the powder in a hydrochloric acid solution (mass percentage: 10%) for 3 hours. Subsequently, filtering out the remaining solid material, and baking the solid material in an electric oven at 60 °C for 24 hours, and then weighing the solid material, and recording the measured weight as m₂. Calculating the mass percentage x of the first positive active material in the original electrode plate formulation as (m₁-m₂)/m₁. Scraping the first positive active material powder from the positive electrode plate again with a knife, weighing out the powder using a balance, and recording the measured weight as m₃ = 100 mg. Mixing the powder with conductive carbon black (Super P) and polyvinylidene fluoride (PVDF) at a mass ratio of 95:2.5:2.5. Adding N-methylpyrrolidone (NMP) as a solvent to formulate a slurry in which the solid content is 65 wt%. Stirring the mixture well. Applying the slurry evenly onto positive current collector aluminum foil, and assembling the oven-dried electrode plate with a lithium metal sheet, a separator, and an electrolyte solution to form a button cell after the electrode plate is oven-dried. Finally, charging the cell at a constant current rate of 0.1C until the voltage reaches 4.3 V, and then charging the cell at a constant voltage rate of 4.3 V until the current tapers off to 0.02C. Subsequently, discharging the cell at a constant current rate of 0.1C until the voltage drops to 2.8 V to obtain an effective capacity of the button cell. Dividing the effective capacity by the weight m₄ of the effective active material powder (m₄ = m₃ × x) to obtain a gravimetric capacity of the first positive active material. The electrolyte solution used here is the same as the electrolyte solution used in Embodiment 1-1.

### (2) Test of the gravimetric capacity b of the second positive active material

First, removing the positive electrode plate from a fully discharged lithium-ion battery, and drying the electrolyte solution in the positive electrode plate in an electric oven at 60 °C. Subsequently, scraping the second positive active material powder from the positive electrode plate with a knife, and weighing out the powder using a balance, and recording the weight as m₁ = 100 mg. Immersing the powder in a hydrochloric acid solution (mass percentage: 10%) for 3 hours. Subsequently, filtering out the remaining solid material, and baking the solid material in an electric oven at 60 °C for 24 hours, and then weighing the solid material, and recording the measured weight as m₂. Calculating the mass percentage x of the second positive active material in the original positive electrode plate formulation as (m₁-m₂)/m₁. Scraping the second positive active material powder from the positive electrode plate again with a knife, weighing out the powder using a balance, and recording the measured weight as m₃ = 100 mg. Mixing the powder with conductive carbon black (Super P) and polyvinylidene fluoride (PVDF) at a mass ratio of 95:2.5:2.5. Adding N-methylpyrrolidone (NMP) as a solvent to formulate a slurry in which the solid content is 65 wt%. Stirring the mixture well. Applying the slurry evenly onto positive current collector aluminum foil, and assembling the oven-dried positive electrode plate with a lithium metal sheet, a separator, and an electrolyte solution to form a button cell after the positive electrode plate is oven-dried. Finally, charging the cell at a constant current rate of 0.1C until the voltage reaches 4.3 V, and then charging the cell at a constant voltage rate of 4.3 V until the current tapers off to 0.02C. Subsequently, discharging the cell at a constant current rate of 0.1C until the voltage drops to 2.8 V to obtain an effective capacity of the button cell. Dividing the effective capacity by the weight m₄ of the effective active material powder (m₄ = m₃ × x) to obtain a gravimetric capacity of the second positive active material. The electrolyte solution used here is the same as the electrolyte solution used in Embodiment 1-1.

### (3) Test of the gravimetric capacity c of the negative active material

First, removing the negative electrode plate from a fully discharged lithium-ion battery, immersing the negative electrode plate in deionized water for 3 hours, and drying the negative electrode plate in an electric oven at 60 °C. Subsequently, scraping negative active material powder from the negative electrode plate with a knife, weighing out the powder using a balance, and recording the weight as m₁ = 100 mg. Heating the powder to 700 °C using a thermogravimetric analyzer (in an inert gas mode), and then recording the weight of the remaining powder as m₂. Calculating the mass percentage y of the negative active material in the negative electrode plate as (m₁-m₂)/m₁. Scraping the negative active material powder from the negative electrode plate again with a knife, weighing out the powder using a balance, and recording the measured weight as m₃ = 100 mg. Mixing the powder with conductive carbon black (Super P) and polyvinylidene fluoride (PVDF) at a mass ratio of 95:2.5:2.5. Adding N-methylpyrrolidone (NMP) as a solvent to formulate a slurry in which the solid content is 65 wt%. Stirring the mixture well. Applying the slurry evenly onto negative current collector copper foil, and assembling the oven-dried negative electrode plate with a lithium metal sheet, a separator, and an electrolyte solution to form a button cell after the negative electrode plate is oven-dried. Finally, charging the cell at a constant current rate of 0.1C until the voltage reaches 1.5 V, and then charging the cell at a constant voltage rate of 1.5 V until the current tapers off to 0.02C. Subsequently, discharging the cell at a constant current rate of 0.1C until the voltage drops to 0 V to obtain an effective capacity of the button cell. Dividing the effective capacity by the weight m₄ of the effective active material powder (m₄ = m₃ × y) to obtain a gravimetric capacity of the negative active material. The electrolyte solution used here is the same as the electrolyte solution used in Embodiment 1-1.

### Test of the coating weight:

### (1) Test of the coating weight of the positive active material layer

Disassembling a fully discharged lithium-ion battery to obtain a positive electrode plate. Cleansing the positive electrode plate with dimethyl carbonate (DMC) to remove surface impurities, and then air-drying the electrode plate. Cutting out a positive electrode plate sample with an area of 1540.25 mm² from an overlap region of the first body part and the second body part in the positive active material layer. Weighing the sample on a balance, and recording the weight as p₁. Subsequently, cleansing the positive active material layer on the positive electrode plate, weighing the positive current collector on a balance, and recording the weight as p₂. Calculating the coating weight as CW₁ = (p₁ - p₂)/2.

It is noted that the coating weight of the positive active material layer in this application means the coating weight of the first body part in the positive active material layer. The coating weight of the second body part in the positive active material layer is the same as the coating weight of the first body part.

The coating weight of the first material layer is equal to CW₁×N₁, and the coating weight of the second material layer is equal to CW₁×N₂. The coating weight of the third material layer is the same as the coating weight of the first material layer, and the coating weight of the fourth material layer is the same as the coating weight of the second material layer.

### (2) Test of the coating weight of the negative active material layer

Disassembling a fully discharged lithium-ion battery to obtain a negative electrode plate. Cleansing the negative electrode plate with DMC to remove surface impurities, and then air-drying the electrode plate. Cutting out a negative electrode plate sample with an area of 1540.25 mm². Weighing the sample on a balance, and recording the weight as q₁. Subsequently, cleansing the negative active material layer on the negative electrode plate, weighing the negative current collector on a balance, and recording the weight as q₂.

If a single side of the negative electrode plate is coated with the negative active material layer, the coating weight is equal to q₁-q₂.

If both sides of the negative electrode plate are coated with the negative active material layer, the coating weight is equal to (q₁-q₂)/2.

### Test of the adhesion force:

Fully discharging the lithium-ion battery in each embodiment and comparative embodiment, and disassembling the lithium-ion battery to obtain a positive electrode plate. Cleansing the positive electrode plate with dimethyl carbonate, and then cutting the electrode plate into 4 cm × 0.5 cm samples. Using 0.2 cm wide rectangular adhesive tape to adhere the sample onto the first positive active material layer. Connecting one end of the adhesive tape to a force gauge. Pulling the force gauge until the adhesive tape tears off the first positive active material layer, and reading the force gauge. Dividing the readout of the force gauge by the width of the adhesive tape (0.2 cm) to obtain the adhesion force. Specifically,

### (1) Test of the adhesion force of the body

Adhering 0.2 cm wide rectangular adhesive tape to the center region of a 4 cm × 0.5 cm sample.

### (2) Test of the edge adhesion force

Adhering 0.2 cm wide rectangular adhesive tape to a region near the edge of a 4 cm × 0.5 cm sample such that the edge of the adhesive tape is aligned with the edge of the sample.

### Capacity test:

Charging the lithium-ion battery in each embodiment and comparative embodiment at a constant current of 0.5C until the voltage reaches 4.3 V, and then charging the battery at a constant voltage of 4.3 V until the current tapers off to 0.02C. Subsequently, discharging the battery at a 0.2C rate until the voltage drops to 2.8 V. Acquiring the corresponding capacity, which is the capacity of the lithium-ion battery in each embodiment and comparative embodiment.

### Embodiment 1-1

### <Preparing a positive electrode plate>

Mixing lithium nickel cobalt manganese oxide (NCM60-10-30, LiNi_{0.6}Co_{0.1}Mn_{0.3}O₂) as a first positive active material, conductive carbon black (Super P) together with conductive carbon nanotubes (CNTs) as a first conductive agent, and polyvinylidene fluoride (PVDF, weight-average molecular weight: 8000 to 10000) as a first binder at a mass ratio of 97.1:1.0:0.4:1.5. Adding N-methylpyrrolidone (NMP) as a solvent. Stirring the mixture well to formulate a first positive electrode slurry in which the solid content is 75 wt%. The gravimetric capacity of the first positive active material, denoted as a, is equal to 180 mAh/g.

At the same time, the first positive electrode slurry also serves as a third positive electrode slurry.

Mixing lithium iron manganese phosphate (LiFe_{0.4}Mn_{0.6}PO₄) as a second positive active material, Super P as a second conductive agent, and PVDF (weight-average molecular weight: 8000 to 10000) as a second binder at a mass ratio of 97.5:1.0:1.5. Adding N-methylpyrrolidone (NMP) as a solvent to formulate a second positive electrode slurry in which the solid content is 65 wt%. The gravimetric capacity of the second positive active material, denoted as b, is equal to 140 mAh/g.

At the same time, the second positive electrode slurry also serves as a fourth positive electrode slurry.

Applying the first positive electrode slurry onto a first surface of 10 µm thick positive current collector aluminum foil, and drying the slurry at 90 °C to obtain a positive electrode plate coated with the first material layer. Applying the second positive electrode slurry onto a surface of the first material layer, the surface being away from the positive current collector. Drying the slurry to obtain a positive electrode plate coated with both the first material layer and the second material layer. Subsequently, repeating the above steps on the second surface of the aluminum foil to obtain a positive electrode plate coated with the first, second, third, and fourth material layers (as shown in FIG. 2). Performing cold-pressing and cutting, and welding an aluminum positive tab to obtain a positive electrode plate of 110 mm × 1100 mm in size for further use.

The length of the first material layer is L₁₂₁ = 970 mm, and the length of the second material layer is L₁₂₂ = 969 mm. The length of the third material layer is L₁₂₃ = 1000 mm, and the length of the fourth material layer L₁₂₄ = 999 mm. The distance by which the first end face extends beyond the second end face is m₁ = 1 mm, and the distance by which the third end face extends beyond the fourth end face is m₂ = 1 mm. The compaction density of the positive active material layer is 2.6 g/cm³. The coating weight of the positive active material layer is CW₁ = 260 mg/1540.24 mm². Based on the total mass of the first positive active material and the second positive active material, the mass percentage of the first positive active material is N₁ = 30%, and the mass percentage of the second positive active material is N₂ = 70%. The coating weight of the first material layer is CW₁×N₁ = 260 × 30%/2 = 39 mg/1540.24 mm², and the coating weight of the second material layer is CW₁×N₂ = 260 × 70%/2 = 91 mg/1540.24 mm². The coating weight of the third material layer is the same as the coating weight of the first material layer, and the coating weight of the fourth material layer is the same as the coating weight of the second material layer.

### <Preparation of a negative electrode plate>

Mixing artificial graphite as a negative active material, conductive carbon black as a negative conductive agent, and styrene-butadiene rubber (SBR, weight-average molecular weight: 50×10⁵) as a negative electrode binder at a mass ratio of 97:1.5:1.5, and then adding deionized water as a solvent. Mixing the solution with a vacuum mixer to formulate a homogeneous negative electrode slurry in which the solid content is 70 wt%. Applying the negative electrode slurry evenly onto one surface of an 8 µm-thick negative current collector copper foil, and drying the foil at 110 °C to obtain a negative electrode plate coated with a 130 µm-thick negative active material layer on a single side. Subsequently, the above steps are repeated on the other surface of the copper foil to obtain a negative electrode plate coated with the negative active material layer on both sides. Performing cold-pressing and cutting, and welding a copper negative tab to obtain a negative electrode plate of 116 mm × 1050 mm in size for future use.

The length of the negative active material layer is 1020 mm, and the compaction density of the negative active material layer is 1.6 g/cm³. The gravimetric capacity of the negative active material is c = 340 mAh/g. The coating weight of the negative active material layer is CW₂ = 135 mg/1540.24 mm².

### <Preparation of a separator>

Using a 15 µm-thick polyethylene film as a separator.

### <Preparation of an electrolyte solution>

Mixing ethylene carbonate (EC), ethyl methyl carbonate (EMC), and diethyl carbonate (DEC) at a mass ratio of 30:50:20 in an dry argon atmosphere to obtain an organic solvent, and then adding LiPF₆ as a lithium salt into the organic solvent to dissolve, and stirring well to obtain an electrolyte solution in which the lithium salt concentration is 1.5 mol/L.

### <Preparation of a lithium-ion battery>

Stacking the above-prepared negative electrode plate, separator, and positive electrode plate sequentially, and winding the stacked structure to obtain a jelly-roll electrode assembly. In the electrode assembly, the first surface of the positive current collector in the positive electrode plate is closer to the outer side of the electrode assembly than the second surface. Putting the electrode assembly into an aluminum laminated film pocket, drying the pocket, and then injecting the electrolyte solution. Performing steps such as vacuum sealing, static standing, chemical formation, degassing, and edge trimming to obtain a lithium-ion battery. Steps of chemical formation: Charging the battery at a constant current of 0.02C until the voltage reaches 3.3 V, and then charging the battery at a constant current of 0.1C until the voltage reaches 3.6 V.

### Embodiments 1-2 to 1-6

Identical to Embodiment 1-1 except that the relevant preparation parameters are adjusted according to Table 1.

When m₁ changes, the length of the second material layer changes accordingly but the length of the first material layer remains unchanged. When m₂ changes, the length of the fourth material layer changes accordingly but the length of the third material layer remains unchanged.

### Embodiment 1-7

### <Preparation of a positive electrode plate>

The second positive active material is changed to lithium iron phosphate, and the gravimetric capacity of the second positive active material is b = 143 mAh/g.

The rest is the same as in Embodiment 1-1.

### Embodiment 1-8

### <Preparation of a positive electrode plate>

The first positive active material is changed to lithium cobalt oxide, and the gravimetric capacity of the first positive active material is a = 200 mAh/g.

The rest is the same as in Embodiment 1-1.

### Embodiment 1-9

### <Preparation of a positive electrode plate>

The first positive active material is changed to lithium nickel cobalt aluminum oxide, and the gravimetric capacity of the first positive active material is a = 185 mAh/g.

The rest is the same as in Embodiment 1-1.

### Embodiments 2-1 to 2-8

Identical to Embodiment 1-1 except that the preparation parameters are adjusted according to Table 1.

In Embodiments 2-5 to 2-8, when the mass percentage of the first conductive agent changes, the mass percentage of the first conductive agent (conductive carbon black (Super P) and the conductive carbon nanotubes (CNT)) changes such that the mass ratio of the Super P to the CNT remains 1.0:0.4.

### Embodiments 3-1 to 3-18

Identical to Embodiment 1-1 except that the preparation parameters are adjusted according to Table 1.

In Embodiments 3-13 to 3-15, when the coating weight CW₁ of the positive active material layer changes, the coating weight of the first material layer changes according to the formula CW₁×N₁, and the coating weight of the second material layer changes according to the formula CW₁×N₂. The coating weight of the third material layer is the same as the coating weight of the first material layer, and the coating weight of the fourth material layer is the same as the coating weight of the second material layer.

### Comparative Embodiments 1 and 3

Identical to Embodiment 1-1 except that the preparation parameters are adjusted according to Table 1.

Table 1 to Table 3 show the preparation parameters and performance parameters of each embodiment and each comparative embodiment.

**Table 1**

| | First positive active material | Second positive active material | L₁₂₁ (mm) | L₁₂₂ (mm) | L₁₂₃ (mm) | L₁₂₄ (mm) | m₁ (mm) | m₂ (mm) | Body adhesion force (N/m) | Edge adhesion force (N/m) | Capacity (mAh) |
|---|---|---|---|---|---|---|---|---|---|---|---|
| Embodiment 1-1 | NCM60-10-30 | LiFe_{0.4}Mn_{0.6}PO₄ | 970 | 969 | 1000 | 999 | 1 | 1 | 8 | 8 | 920 |
| Embodiment 1-2 | NCM60-10-30 | LiFe_{0.4}Mn_{0.6}PO₄ | 970 | 969.5 | 1000 | 999.5 | 0.5 | 0.5 | 8 | 8 | 921 |
| Embodiment 1-3 | NCM60-10-30 | LiFe_{0.4}Mn_{0.6}PO₄ | 970 | 968 | 1000 | 998 | 2 | 2 | 8 | 8 | 918 |
| Embodiment 1-4 | NCM60-10-30 | LiFe_{0.4}Mn_{0.6}PO₄ | 970 | 965 | 1000 | 995 | 5 | 5 | 8 | 8 | 910 |
| Embodiment 1-5 | NCM60-10-30 | LiFe_{0.4}Mn_{0.6}PO₄ | 970 | 969.8 | 1000 | 999.8 | 0.2 | 0.2 | 8 | 8 | 921.6 |
| Embodiment 1-6 | NCM60-10-30 | LiFe_{0.4}Mn_{0.6}PO₄ | 970 | 964.5 | 1000 | 994.5 | 5.5 | 5.5 | 8 | 8 | 909 |
| Embodiment 1-7 | NCM60-10-30 | Lithium iron phosphate | 970 | 969 | 1000 | 999 | 1 | 1 | 8 | 8 | 921 |
| Embodiment 1-8 | Lithium cobalt oxide | LiFe_{0.4}Mn_{0.6}PO₄ | 970 | 969 | 1000 | 999 | 1 | 1 | 8 | 8 | 930 |
| Embodiment 1-9 | Lithium nickel cobalt aluminum oxide | LiFe_{0.4}Mn_{0.6}PO₄ | 970 | 969 | 1000 | 999 | 1 | 1 | 8 | 8 | 928 |
| Comparative Embodiment 1 | LiFe_{0.4}Mn_{0.6}PO₄ | NCM60-10-30 | 970 | 969 | 1000 | 999 | 1 | 1 | 2 | 2 | 900 |
| Comparative Embodiment 2 | NCM60-10-30 | LiFe_{0.4}Mn_{0.6}PO₄ | 969 | 970 | 999 | 1000 | -1 | -1 | 8 | 3 | 890 |

| | | | | | | | | | | | |
|---|---|---|---|---|---|---|---|---|---|---|---|
| Note: "\" in Table 1 indicates absence of the corresponding parameter. | | | | | | | | | | | |

As can be seen from Embodiments 1-1 to 1-9 and Comparative Embodiments 1 and 2, in the embodiments of this application, the first positive active material and the second positive active material that fall within the ranges specified herein are selected, and the length of the first material layer is controlled to be greater than the length of the second material layer, the first end face is controlled to extend beyond the second end face, and the length of the first material layer is controlled to be less than the length of the second positive active material layer, so that the positive electrode plate exhibits a higher body adhesion force and a higher edge adhesion force, and the lithium-ion battery exhibits a relatively high capacity, thereby reducing the risk of delamination of the positive active material layer and achieving a relatively high capacity of the lithium-ion battery. However, for the lithium-ion batteries in Comparative Embodiments 1 and 2, the first positive active material and the second positive active material that fall within the ranges specified herein are not selected, or the length of the first material layer is not greater than the length of the second material layer, or the first end face does not extend beyond the second end face, so that the positive electrode plate exhibits a lower body adhesion force and/or a lower edge adhesion force, indicating that the lithium-ion battery fails to reduce the risk of delamination of the positive active material layer while maintaining a high capacity.

The distance m₁ by which the first end face extends beyond the second end face as well as the distance m₂ by which the third end face extends beyond the fourth end face typically affect the capacity of the lithium-ion battery and the risk of delamination of the positive active material layer. As can be seen from Embodiments 1-1 to 1-6, when the distance m₁ by which the first end face extends beyond the second end face and the distance m₂ by which the third end face extends beyond the fourth end face fall within the ranges specified herein, the electrochemical device exhibits a relatively high body adhesion force and a relatively high edge adhesion force, and exhibits a relatively high capacity, so that the positive active material layer is at a relatively low risk of delamination while the lithium-ion battery maintains a relatively high capacity. Although the capacity of the lithium-ion battery in Embodiment 1-5 is higher than that in Embodiments 1-1 to 1-4, the distance m₁ by which the first end face extends beyond the second end face and the distance m₂ by which the third end face extends beyond the fourth end face are excessively small. This places very high requirements on the processing technology during actual production, increases the production cost of the lithium-ion battery, and hinders large-scale industrial production.

The types of the first positive active material and the second positive active material typically affect the capacity of the lithium-ion battery and the risk of delamination of the positive active material layer. As can be seen from Embodiment 1-1 and Embodiments 1-7 to 1-9, when the types of the first positive active material and the second positive active material fall within the ranges specified herein, the electrochemical device exhibits a relatively high body adhesion force and a relatively high edge adhesion force, and exhibits a relatively high capacity, indicating that the positive active material layer is at a relatively low risk of delamination and the lithium-ion battery exhibits a relatively high capacity.

**Table 2**

| | Content of first positive active material (%) | Content of first conductive agent (%) | Content of first binder (%) | Content of second positive active material (%) | Content of second conductive agent (%) | Content of second binder (%) | N₁ (%) | N₂ (%) | Body adhesion force (N/m) | Edge adhesion force (N/m) | Capacity (mAh) |
|---|---|---|---|---|---|---|---|---|---|---|---|
| Embodiment 1-1 | 97.1 | 1.4 | 1.5 | 97.5 | 1.0 | 1.5 | 30 | 70 | 8 | 8 | 920 |
| Embodiment 2-1 | 97.1 | 1.4 | 1.5 | 97.5 | 1.0 | 1.5 | 95 | 5 | 8 | 8 | 1060 |
| Embodiment 2-2 | 97.1 | 1.4 | 1.5 | 97.5 | 1.0 | 1.5 | 70 | 30 | 8 | 8 | 1006 |
| Embodiment 2-3 | 97.1 | 1.4 | 1.5 | 97.5 | 1.0 | 1.5 | 40 | 60 | 8 | 8 | 942 |
| Embodiment 2-4 | 97.1 | 1.4 | 1.5 | 97.5 | 1.0 | 1.5 | 5 | 95 | 8 | 8 | 866 |
| Embodiment 2-5 | 95 | 2 | 3 | 95 | 3 | 2 | 30 | 70 | 12 | 12 | 903 |
| Embodiment 2-6 | 98 | 1.5 | 0.5 | 98 | 1.5 | 0.5 | 30 | 70 | 4 | 4 | 927 |
| Embodiment 2-7 | 94.5 | 2 | 3.5 | 94.5 | 3 | 2.5 | 30 | 70 | 15 | 15 | 899 |
| Embodiment 2-8 | 98.5 | 1.2 | 0.3 | 98.5 | 1.2 | 0.3 | 30 | 70 | 3 | 3 | 931 |

The mass percentage of the second positive active material based on the total mass of the first positive active material and the second positive active material typically affects the capacity of the lithium-ion battery and the risk of delamination of the positive active material layer. As can be seen from Embodiment 1-1 and Embodiments 2-1 to 2-4, when the mass percentage of the second positive active material falls within the range specified herein, the electrochemical device exhibits a relatively high body adhesion force and a relatively high edge adhesion force, and exhibits a relatively high capacity, indicating that the positive active material layer is at a relatively low risk of delamination and the lithium-ion battery exhibits a relatively high capacity.

The content of the first binder in the first positive active material and the content of the second binder in the second positive active material typically affect the capacity of the lithium-ion battery and the risk of delamination of the positive active material layer. As can be seen from Embodiment 1-1 and Embodiments 2-5 to 2-8, when the content of the first binder in the first positive active material and the content of the second binder in the second positive active material fall within the ranges specified herein, the electrochemical device exhibits a relatively high body adhesion force and a relatively high edge adhesion force, and exhibits a relatively high capacity, indicating that the positive active material layer is at a relatively low risk of delamination and the lithium-ion battery exhibits a relatively high capacity.

**Table 3**

| | First positive active material | a (mAh/g) | Second positive active material | b (mAh/g) | (a-b)/b×100% | Negative active material | c (mAh/g) | CW₁ (mg/1540.24 mm²) | CW₂ (mg/1540.24 mm²) | Body adhesion force (N/m) | Edge adhesion force (N/m) | Capacity (mAh) |
|---|---|---|---|---|---|---|---|---|---|---|---|---|
| Embodiment 1-1 | NCM60-10-30 | 180 | LiFe_{0.4}Mn_{0.6}PO₄ | 140 | 29% | Artificial graphite | 340 | 260 | 135 | 8 | 8 | 920 |
| Embodiment 3-1 | NCM50-20-30 | 160 | LiFe_{0.4}Mn_{0.6}PO₄ | 140 | 14% | Artificial graphite | 340 | 260 | 135 | 8 | 8 | 908 |
| Embodiment 3-2 | NCM80-10-10 | 210 | LiFe_{0.2}Mn_{0.8}PO₄ | 120 | 75% | Artificial graphite | 340 | 260 | 135 | 8 | 8 | 930 |
| Embodiment 3-3 | NCM33-33-33 | 150 | LiFe_{0.4}Mn_{0.6}PO₄ | 140 | 7% | Artificial graphite | 340 | 260 | 135 | 8 | 8 | 902 |
| Embodiment 3-4 | NCM90-5-5 | 220 | LiFe_{0.2}Mn_{0.8}PO₄ | 120 | 83% | Artificial graphite | 340 | 260 | 135 | 8 | 8 | 938 |
| Embodiment 3-5 | NCM90-5-5 | 220 | LiFe_{0.4}Mn_{0.6}PO₄ | 140 | 57% | Artificial graphite | 340 | 260 | 135 | 8 | 8 | 944 |
| Embodiment 3-6 | NCM60-10-30 | 180 | LiFe_{0.3}Mn_{0.7}PO₄ | 130 | 38% | Artificial graphite | 340 | 260 | 135 | 8 | 8 | 916 |
| Embodiment 3-7 | NCM60-10-30 | 180 | LiFe_{0.1}Mn_{0.9}PO₄ | 110 | 64% | Artificial graphite | 340 | 260 | 135 | 8 | 8 | 908 |
| Embodiment 3-8 | NCM60-10-30 | 180 | LiFe_{0.5}Mn_{0.5}PO₄ | 150 | 20% | Artificial graphite | 340 | 260 | 135 | 8 | 8 | 924 |
| Embodiment 3-9 | NCM60-10-30 | 180 | LiFe_{0.4}Mn_{0.6}PO₄ | 140 | 29% | Artificial graphite | 280 | 260 | 135 | 8 | 8 | 920 |
| Embodiment 3-10 | NCM60-10-30 | 180 | LiFe_{0.4}Mn_{0.6}PO₄ | 140 | 29% | Artificial graphite + silicon (mass percentage 3 | 420 | 260 | 135 | 8 | 8 | 920 |

| | First positive active material | a (mAh/g) | Second positive active material | b (mAh/g) | (a-b)/b×100% | Negative active material wt%) | c (mAh/g) | CW₁ (mg/1540.24 mm²) | CW₂ (mg/1540.24 mm²) | Body adhesion force (N/m) | Edge adhesion force (N/m) | Capacity (mAh) |
|---|---|---|---|---|---|---|---|---|---|---|---|---|
| Embodiment 3-11 | NCM60-10-30 | 180 | LiFe_{0.4}Mn_{0.6}PO₄ | 140 | 29% | Artificial graphite | 260 | 260 | 135 | 8 | 8 | 920 |
| Embodiment 3-12 | NCM60-10-30 | 180 | LiFe_{0.4}Mn_{0.6}PO₄ | 140 | 29% | Artificial graphite + silicon (mass percentage 5 wt%) | 440 | 260 | 135 | 8 | 8 | 920 |
| Embodiment 3-13 | NCM60-10-30 | 180 | LiFe_{0.4}Mn_{0.6}PO₄ | 140 | 29% | Artificial graphite | 340 | 200 | 135 | 9 | 9 | 806 |
| Embodiment 3-14 | NCM60-10-30 | 180 | LiFe_{0.4}Mn_{0.6}PO₄ | 140 | 29% | Artificial graphite | 340 | 600 | 135 | 4 | 4 | 1563 |
| Embodiment 3-15 | NCM60-10-30 | 180 | LiFe_{0.4}Mn_{0.6}PO₄ | 140 | 29% | Artificial graphite | 340 | 620 | 135 | 3 | 3 | 1601 |
| Embodiment 3-16 | NCM60-10-30 | 180 | LiFe_{0.4}Mn_{0.6}PO₄ | 140 | 29% | Artificial graphite | 340 | 260 | 200 | 6 | 6 | 1078 |
| Embodiment 3-17 | NCM60-10-30 | 180 | LiFe_{0.4}Mn_{0.6}PO₄ | 140 | 29% | Artificial graphite | 340 | 260 | 300 | 4 | 4 | 1320 |
| Embodiment 3-18 | NCM60-10-30 | 180 | LiFe_{0.4}Mn_{0.6}PO₄ | 140 | 29% | Artificial graphite | 340 | 260 | 320 | 3 | 3 | 1269 |

| | | | | | | | | | | | | |
|---|---|---|---|---|---|---|---|---|---|---|---|---|
| Note: In Table 3, the chemical formula of NCM50-20-30 is LiNi_{0.5}Co_{0.2}Mn_{0.3}O₂, the chemical formula of NCM80-10-10 is LiNi_{0.8}Co_{0.1}Mn_{0.1}O₂, the chemical formula of NCM33-33-33 is LiNi_{1/3}Co_{1/3}Mn_{1/3}O₂, and the chemical formula of NCM90-5-5 is LiNi_{0.9}Co_{0.05}Mn_{0.05}O₂. | | | | | | | | | | | | |

The gravimetric capacity a of the first positive active material, the gravimetric capacity b of the second positive active material, and the value of (a-b)/b× 100% typically affect the capacity of the lithium-ion battery and the risk of delamination of the positive active material layer. As can be seen from Embodiment 1-1 and Embodiments 3-5 to 3-8, when the gravimetric capacity a of the first positive active material, the gravimetric capacity b of the second positive active material, and the value of (a-b)/b× 100% fall within the ranges specified herein, the electrochemical device exhibits a relatively high body adhesion force and a relatively high edge adhesion force, and exhibits a relatively high capacity, indicating that the positive active material layer is at a relatively low risk of delamination and the lithium-ion battery exhibits a relatively high capacity. Although the capacities of the lithium-ion batteries in Embodiments 3-4, 3-5, 3-7, and 3-8 are higher than those of Embodiments 1-1 and 3-1, the production costs of the lithium-ion batteries in Embodiments 3-4, 3-5, 3-7, and 3-8 are higher, thereby hindering large-scale industrial production.

The gravimetric capacity c of the negative active material typically affects the capacity of the lithium-ion battery and the risk of delamination of the positive active material layer. As can be seen from Embodiment 1-1 and Embodiments 3-9 to 3-12, when the gravimetric capacity c of the negative active material falls within the range specified herein, the electrochemical device exhibits a relatively high body adhesion force and a relatively high edge adhesion force, and exhibits a relatively high capacity, indicating that the positive active material layer is at a relatively low risk of delamination and the lithium-ion battery exhibits a relatively high capacity. Although the capacities of the lithium-ion batteries in Embodiments 3-11 and 3-12 are the same as those of the lithium-ion batteries in Embodiment 1-1 and Embodiments 3-9 and 3-10, the production costs of the lithium-ion batteries in Embodiments 3-11 and 3-12 are higher, thereby hindering large-scale industrial production.

The coating weight of the positive active material layer typically affects the capacity of the lithium-ion battery and the risk of delamination of the positive active material layer. As can be seen from Embodiment 1-1 and Embodiments 3-13 to 3-15, when the coating weight of the positive active material layer falls within the range specified herein, the electrochemical device exhibits a relatively high body adhesion force and a relatively high edge adhesion force, and exhibits a relatively high capacity, indicating that the positive active material layer is at a relatively low risk of delamination and the lithium-ion battery exhibits a relatively high capacity. Although the capacity of the lithium-ion battery in Embodiment 3-15 is higher than that of the lithium-ion batteries in Embodiment 1-1 and Embodiments 3-13 and 3-14, the production cost of the lithium-ion battery in Embodiment 3-15 is higher, thereby hindering large-scale industrial production.

The coating weight of the negative active material layer typically affects the capacity of the lithium-ion battery and the risk of delamination of the positive active material layer. As can be seen from Embodiment 1-1 and Embodiments 3-16 to 3-18, when the coating weight of the negative active material layer falls within the range specified herein, the electrochemical device exhibits a relatively high body adhesion force and a relatively high edge adhesion force, and exhibits a relatively high capacity, indicating that the positive active material layer is at a relatively low risk of delamination and the lithium-ion battery exhibits a relatively high capacity. Although the capacity of the lithium-ion battery in Embodiment 3-18 is higher than that of the lithium-ion batteries in Embodiment 1-1 and Embodiments 3-16 and 3-17, the production cost of the lithium-ion battery in Embodiment 3-18 is higher, thereby hindering large-scale industrial production.

It is noted that the relational terms herein such as "first" and "second" are used merely to differentiate one entity or operation from another, but do not involve or imply any actual relationship or sequence between the entities or operations. Moreover, the terms "include", "comprise", and any variation thereof are intended to cover a non-exclusive inclusion relationship by which a process, method, object, or device that includes or comprises a series of elements not only includes such elements, but also includes other elements not expressly specified or also includes inherent elements of the process, method, object, or device.

Different embodiments of this application are described in a correlative manner. For the same or similar part in one embodiment, reference may be made to another embodiment. Each embodiment focuses on differences from other embodiments.

Described above are merely preferred embodiments of this application that are not intended to limit this application. Any modifications, equivalent replacements, improvements, and the like made without departing from the concept and principles of this application still fall within the protection scope of this application.

## Claims

1. An electrochemical device, comprising an electrode assembly containing a positive electrode plate, wherein the positive electrode plate comprises a positive current collector and a positive active material layer, the positive active material layer comprises a first positive active material layer and a second positive active material layer, the first positive active material layer is disposed on a first surface of the positive current collector, the second positive active material layer is disposed on a second surface of the positive current collector, the first surface faces away from a winding center of the electrode assembly and is opposite to the second surface, the first positive active material layer comprises a first material layer and a second material layer, the first material layer is disposed on the first surface of the positive current collector, and the second material layer is disposed on a surface of the first material layer, the surface being away from the positive current collector;
the first material layer comprises a first positive active material, the first positive active material comprises at least one of lithium cobalt oxide, lithium nickel cobalt manganese oxide, lithium nickel cobalt aluminum oxide, or lithium manganese oxide; the second material layer comprises a second positive active material, and the second positive active material comprises at least one of lithium iron manganese phosphate or lithium iron phosphate; and
along a length direction of an unwound positive electrode plate, a length of the first material layer is greater than a length of the second material layer, a terminal end of the first material layer comprises a first end face, a terminal end of the second material layer comprises a second end face, the first end face extends beyond the second end face, and the length of the first material layer is less than a length of the second positive active material layer.

2. The electrochemical device according to claim 1, wherein a distance of the first end face beyond the second end face is m₁, satisfying 0.5 mm ≤ m₁ ≤ 5 mm.

3. The electrochemical device according to claim 1, wherein the first material layer further comprises a first conductive agent and a first binder, and based on a mass of the first material layer, a mass percentage of the first positive active material is 95% to 98%, a mass percentage of the first conductive agent is 0.5% to 3%, and a mass percentage of the first binder is 0.5% to 3%; and/or
the second material layer further comprises a second conductive agent and a second binder; based on a mass of the second material layer, a mass percentage of the second positive active material is 95% to 98%, a mass percentage of the second conductive agent is 0.6% to 3%, and a mass percentage of the second binder is 0.5% to 2%.

4. The electrochemical device according to claim 1, wherein a gravimetric capacity of the first positive active material is a, and a gravimetric capacity of the second positive active material is b, satisfying: 10% ≤ (a - b)/b ≤ 75%, and 160 mAh/g ≤ a ≤ 210 mAh/g.

5. The electrochemical device according to claim 4, wherein, 14% ≤ (a - b)/b ≤ 30%.

6. The electrochemical device according to claim 4, wherein, 120 mAh/g ≤ b ≤ 140 mAh/g.

7. The electrochemical device according to claim 1, wherein, along the length direction of the unwound positive electrode plate the positive active material layer comprises a first body part and a first edge part, the first edge part is a part by which the first material layer extends beyond the second material layer; and
based on a total mass of the first positive active material and the second positive active material in the first body part, a mass percentage of the second positive active material is 5% to 95%.

8. The electrochemical device according to claim 7, wherein, based on a total mass of the first positive active material and the second positive active material in the first body part, a mass percentage of the second positive active material is 5% to 60%.

9. The electrochemical device according to claim 7, wherein a cell balance value CB of the electrochemical device satisfies: 1.04 ≤ CB ≤ 1.2.

10. The electrochemical device according to claim 9, wherein a CB value of the first edge part is greater than or equal to a CB value of the first body part.

11. The electrochemical device according to claim 1, wherein a coating weight of the positive active material layer is 200 mg/1540.24 mm² to 600 mg/1540.24 mm².

12. The electrochemical device according to claim 1, wherein the electrode assembly further comprises a negative electrode plate , the negative electrode plate comprises a negative current collector and a negative active material layer disposed on at least one surface of the negative current collector, and a coating weight of the negative active material layer is 100 mg/1540.24 mm² to 300 mg/1540.24 mm².

13. The electrochemical device according to claim 12, wherein the negative active material layer comprises a negative active material, and a gravimetric capacity of the negative active material is 280 mAh/g to 420 mAh/g.

14. The electrochemical device according to any one of claims 1 to 13, wherein the second positive active material layer comprises a third material layer and a fourth material layer, the third material layer is disposed on a second surface of the positive current collector, and the fourth material layer is disposed on a surface of the third material layer the surface being away from the positive current collector; and
along the length direction of the unwound positive electrode plate, a length of the third material layer is greater than a length of the fourth material layer, a terminal end of the third material layer comprises a third end face, a terminal end of the fourth material layer comprises a fourth end face, and the third end face extends beyond the fourth end face.

15. The electrochemical device according to claim 14, wherein the length of the first material layer is less than the length of the third material layer, and/or the length of the first material layer is less than the length of the fourth material layer.

16. The electrochemical device according to claim 14, wherein a distance of the third end face beyond the fourth end face is m₂, 0.5 mm ≤ m₂ ≤ 5 mm.

17. An electronic device, wherein the electronic device comprises the electrochemical device according to any one of claims 1 to 16.
